(19) Europäisches Patentamt / European Patent Office / Office européen des brevets

(11) **EP 2 900 489 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **13748042.2**

(22) Anmeldetag: **13.08.2013**

(51) Int Cl.:
**B60C 11/12** *(2006.01)*  **B60C 11/04** *(2006.01)*

(86) Internationale Anmeldenummer:
**PCT/EP2013/066846**

(87) Internationale Veröffentlichungsnummer:
**WO 2014/048635 (03.04.2014 Gazette 2014/14)**

(54) **FAHRZEUGLUFTREIFEN**

PNEUMATIC VEHICLE TYRE

PNEUMATIQUE POUR VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2012 DE 102012109069**

(43) Veröffentlichungstag der Anmeldung:
**05.08.2015 Patentblatt 2015/32**

(73) Patentinhaber: **Continental Reifen Deutschland GmbH**
**30165 Hannover (DE)**

(72) Erfinder: **BEHR, Ulrich**
**30167 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**JP-A- 2003 159 910     US-A1- 2011 220 258**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Fahrzeugluftreifen für Personenkraftwagen mit einem profilierten Laufstreifen mit durch Rillen von einander beabstandeten Profilbändern, welche sich über den gesamten Umfang des Fahrzeugluftreifens erstrecken und in radialer Richtung R nach außen von einer die Bodenkontaktoberfläche bildenden radial äußeren Oberfläche begrenzt sind, wobei in wenigstens einem Profilband ein über den gesamten Umfang erstreckter Einschnitt ausgebildet ist, welcher sich in radialer Richtung R des Reifens ausgehend von der radial äußeren Oberfläche des Profilbandes nach radial innen bis in eine Tiefe H erstreckt und dort endet, wobei der Einschnitt in radialer Richtung R mit einem radial inneren Erstreckungsbereich der radialen Erstreckungshöhe $H_i$ und mit einem radial äußeren Erstreckungsbereich der radialen Erstreckungshöhe $H_a$ ausgebildet ist, wobei der Einschnitt im radial äußeren Erstreckungsbereich als Feineinschnitt und im radial inneren Erstreckungsbereich als Durchgangskanal mit der Kanalbreite $B_i$ ausgebildet ist und wobei der Feineinschnitt in seinem radial inneren an den Durchgangskanal anschließenden Erstreckungsabschnitt der Erstreckungshöhe $H_2$ mit konstanter Feineinschnittbreite $B_2$ mit $B_2 < B_i$ und in seinem radial äußeren Erstreckungsbereich der Erstreckungshöhe $H_3$ v-förmig erweitert mit einer bis zur radial äußeren Oberfläche hin kontinuierlich zunehmenden Breite $B_3$ ausgebildet ist.

Derartige Fahrzeugluftreifen sind bekannt. Gerade bei Pkw-Fahrzeugluftreifen, welche für sportliches Fahren bei hohen Geschwindigkeiten auslegt sind, unterliegt die für den Einsatz am Fahrzeug ausgebildete Reifenaußenschulter einem stark ausgeprägten Zielkonflikt aus guten Trockenhandlingeigenschaften einerseits und aus guten Nasshandlingeigenschaften andererseits. Bei extremen Fahrmanövern wirken gerade im Bereich der Reifenaußenschulter sehr große Kräfte, die übertragen werden müssen, und zwar sowohl auf trockener als auch auf nasser Straße. Auf nasser Straße ist hierfür eine wirkungsvolle Wasserabfuhr aus dem Bereich der Reifenschulter erforderlich. Mit Hilfe von feinen Umfangsrillen ist zwar eine gewisse Wasserabführung aus dem Bereich des Footprints der Reifenaußenschulter möglich. Gleichzeitig wird hierdurch jedoch die Quersteifigkeit des Profilbandes reduziert, wodurch die maximale Kraftübertragung auf nasser und auf trockener Straße beim Handling beschränkt wird. Sehr feine Umfangsrillen oder Feineinschnitte im Bereich der Reifenaußenschulter werden üblicher Weise mit angehobenem Rillengrund und somit mit gegenüber der Profiltiefe reduzierter Tiefe ausgebildet, um den Profiluntergrund in dem für die Kraftübertragung wichtigen Außenschulterbereich nicht einzuschneiden. Die reduzierte Tiefe reduziert jedoch zusätzlich die Entwässerungswirkung.

Gelegentlich wurde im Zusammenhang mit Nutzfahrzeugreifen vorgeschlagen, Einschnitte, welche sich über den Umfang des Fahrzeugluftreifens erstrecken, im radial inneren Erstreckungsbereich als breiten Durchgangskanal und im radial äußeren Erstreckungsbereich als Feineinschnitt auszubilden. Bei den Nutzfahrzeugreifen dient dies dazu, die Lebensdauer des wirksamen Laufstreifenprofils zu verlängern. Sobald das Profil soweit abgefahren ist, dass die eigentlichen Umfangsrillen massiv an Aufnahmekapazität für Wasser einbüßen, ist auch im Bereich des Einschnitts das Profil soweit abgefahren, dass sich der Durchgangskanal zu einer neuen Rille öffnet und somit zusätzliches Volumen zur Aufnahme von Wasser bereitgestellt wird. Derartige Vorschläge wurden auch bereits im Zusammenhang mit Pkw-Reifen gemacht.

Aus der EP0640499B1 ist eine derartige Ausbildung eines Nutzfahrzeugluftreifens bekannt, bei welcher in einer im Bereich der Reifenkrone ausgebildeten Umfangsrippe schräg verlaufende Querrillen ausgebildet sind, die jeweils durch ebenfalls in der Umfangsrippe schräg verlaufend ausgebildete Umfangsrillenabschnitte miteinander verbunden sind. Sowohl die Querrillen als auch die sie verbindenden schräg verlaufenden Umfangsrillenabschnitte sind dabei in ihrem radial inneren Erstreckungsbereich mit einem breiten Öffnungskanal und in ihrem radial äußeren Erstreckungsbereich als gegenüber dem breiten Öffnungskanal schmalere Rille ausgebildet. Dieser schmalere Rillenabschnitt ist mit seinem zur radial äußeren Oberfläche der Umfangsrippe hin gerichteten, radial äußeren Erstreckungsbereich im Querschnitt V-förmig erweitert ausgebildet. Längs der gesamten Erstreckung der Umfangs- bzw. Querrillen bleibt der Querschnitt der jeweiligen Rille konstant uns zwar mit ihrem Gesamtquerschnitt, d.h. sowohl mit ihrem Querschnitt im Bereich des Durchgangskanals als auch in dem als schmale Rille ausgebildeten Erstreckungsbereich. Die Umfangsrillen und auch die Querrillen erstrecken sich somit sowohl mit ihrem radialen Erstreckungsabschnitt des Durchgangskanals als auch mit ihrem Rillenerstreckungsabschnitt längs der Gesamterstreckungsrichtung der Rille.

Der bei diesen Nutzfahrzeugreifen ausgebildete Umfangserstreckungsabschnitt der Umfangsrillen erstreckt sich über ihren gesamten radialen Erstreckungsabschnitt zwischen Querrille und Querrille in gleicher Weise schräg zur Umfangsrichtung verlaufend. Bei diesem Nutzfahrzeugreifen kann hierdurch über die Lebensdauer des Reifens eine gewünschte Verbesserung der Wasserabfuhr aus dem zentralen Bereich des Reifens ermöglicht werden. Derartige Nutzfahrzeugreifen werden üblicher Weise nicht für hohe Geschwindigkeiten mit besonderen Handlingeigenschaften bei sportlichem Fahren ausgelegt. Die bei dieser Ausbildung über den Umfang des Reifens durch die Umfangsabschnitte und die Querrillen bewirkte zickzackartig ausgebildete Ausbildung einer Rille, die sich mit ihrem gesamten radialen Erstreckungsbereich ausgehend von der Durchgangsöffnung über den V-förmigen Erweiterungsbereich und den dazwischen angeordneten Zwischenbereich zickzackförmig über den Reifen erstreckt, kann jedoch beim Einsatz bei höheren Geschwindigkeiten mit hohen Querkräften die Wasserabfuhr durch die zickzackförmige Ausbildung des Durchgangskanals vor Erreichen des Abnutzungsgrades des Reifens bis zur Öffnung des Durchgangskanals behindern. In dem zentralen Kronenbereich des Nutzfahrzeigreifens der EP0640499 B1, welcher HandlingEigenschaften ohnehin nur begrenzt beeinflusst wirkt sich die dort vorgeschlagene Ausbildung bei den Nutzfahrzeugreifen, die üblicherweise nicht für hohe Geschwindigkeiten ausgelegt sind, nicht behinderlich aus.

Im Einsatz bei Pkw-Reifen für Hochgeschwindigkeitseignung ist jedoch im Bereich der Reifenaußenschulter eine derartige durch Zickzackform beeinflusste Wasserabfuhr im Bereich des Rillengrundes nicht wünschenswert. Die Zickzackform würde hier die Wasserabfuhr behindern und gleichzeitig die gerade für den Außenschulterbereich wichtige Quersteifigkeit unerwünscht reduzieren.

Der Erfindung liegt die Aufgabe zugrunde, die Außenschulter eines derartigen Fahrzeugluftreifens mit guter Querkraftübertragung bei ausreichender Entwässerung für Handling bei hohen Geschwindigkeiten auszubilden.

Die Aufgabe wird erfindungsgemäß durch die Ausbildung eines Fahrzeugluftreifens für Personenkraftwagen mit einem profilierten Laufstreifen mit durch Rillen von einander beabstandeten Profilbändern, welche sich über den gesamten Umfang des Fahrzeugluftreifens erstrecken und in radialer Richtung R nach außen von einer die Bodenkontaktoberfläche bildenden radial äußeren Oberfläche begrenzt sind, wobei in wenigstens einem Profilband ein über den gesamten Umfang erstreckter Einschnitt ausgebildet ist, welcher sich in radialer Richtung R des Reifens ausgehend von der radial äußeren Oberfläche des Profilbandes nach radial innen bis in eine Tiefe H erstreckt und dort endet, wobei der Einschnitt in radialer Richtung R mit einem radial inneren Erstreckungsbereich der radialen Erstreckungshöhe $H_i$ und mit einem radial äußeren Erstreckungsbereich der radialen Erstreckungshöhe $H_a$ ausgebildet ist, wobei der Einschnitt im radial äußeren Erstreckungsbereich als Feineinschnitt und im radial inneren Erstreckungsbereich als Durchgangskanal mit der Kanalbreite $B_i$ ausgebildet ist und wobei der Feineinschnitt in seinem radial inneren an den Durchgangskanal anschließenden Erstreckungsabschnitt der Erstreckunghöhe $H_2$ mit konstanter Feineinschnittbreite $B_2$ mit $B_2 < B_i$ und in seinem radial äußeren Erstreckungsbereich der Erstreckungshöhe $H_3$ v-förmig erweitert mit einer bis zur radial äußeren Oberfläche hin kontinuierlich zunehmenden Breite $B_3$ ausgebildet ist, gemäß den Merkmalen von Anspruch 1 gelöst, bei dem das Profilband ein in der als für den Einsatz im Fahrzeug als Außenschulter ausgebildeten Reifenschulter ausgebildet ist, bei dem der Durchgangskanal und der innere Erstreckungsbereich des Feineinschnitts über den gesamten Umfang hinweg in Umfangsrichtung U geradlinig erstreckt verlaufend ausgebildet sind und bei dem über den Umfang des Reifens hinweg hintereinander Umfangserstreckungsabschnitte angeordnet sind, in welchen der Verlauf einer der beiden - insbesondere beider der - den Feineinschnitt begrenzenden Einschnittwände in der radial äußeren Oberfläche unter Einschluss eines sich über den Umfang des Reifens geänderten Neigungswinkels $\gamma$ zur Umfangsrichtung U ausgebildet ist.

Durch diese Ausbildung wird mit Hilfe des Einschnitts eine verbesserte geradlinige Wasserabfuhr in Umfangsrichtung im Bereich des Profilgrundes ermöglicht. Die Wasserableitung ist in Umfangsrichtung U unbehindert. Die V-Form des radialen äußeren Erstreckungsbereichs des Feineinschnittbereiches bewirkt ein verbessertes Einleiten des Oberflächenwassers in den Durchgangskanal. Der zwischen Durchgangsöffnung und V-förmig erweitertem Erstreckungsbereich ausgebildete schmale Feineinschnittbereich sichert eine hohe Quersteifigkeit, welche durch die geradlinig in Umfangsrichtung U ausgerichtete Ausbildung des Rillengrundes sowie die geradlinig in Umfangsrichtung ausgerichtete Ausbildung des schmalen zwischen V-förmig erweitertem Feineinschnittsbereich und dem Durchgangskanal ausgebildeten mittleren radialen Erstreckungsabschnitt zusätzlich verstärkt wird. Die geradlinige Ausbildung des schmalen Zwischenabschnitts sichert zusätzlich eine hohe Abstützwirkung während des Handlings. Die breite Ausbildung des Durchgangskanals ermöglicht eine Ausbildung des Einschnittes bis in den Profilgrund, wobei durch die breite Durchgangsöffnung ein Einschneiden im Profilgrund beim Einformen während der Vulkanisierung verhindert werden kann. Die Ausbildung des Verlaufes wenigstens einer Einschnittwand in der radial äußeren Oberfläche unter Einschluss eines sich über den Umfang des Reifens veränderten Neigungswinkels $\gamma$ zur Umfangsrichtung U ermöglicht eine zusätzliche Verbesserung der Einleitung des Wassers durch den sich trichterförmig nach radial innen hin verjüngenden Feineinschnitt bis in den Durchgangskanal und zusätzlich eine erhöhte effektive Griffkantenlänge im Bereich der Straßenkontaktoberfläche zur Übertragung von Umfangs- und Querkräften auf nasser und trockener Straße. Somit kann durch diese Ausbildung bei verbesserter Wasserabführung im Bereich der Reifenaußenschulter bei hoher Schersteifigkeit in Quer- und in Umfangsrichtung eine verbesserte Kraftübertragung zur Übertragung von Querkräften auf nasser und trockener Straße und somit verbesserte Nass- und Trockenhandling-Eigenschaften ermöglicht werden.

Besonders vorteilhaft ist die Ausbildung eines Fahrzeugreifens gemäß den Merkmalen von Anspruch 2, bei dem über den Umfangs des Reifens hinweg hintereinander Umfangserstreckungsabschnitte der in Umfangsrichtung gemessenen Erstreckungslänge L angeordnet sind, in welchen der Verlauf einer der beiden - insbesondere beider der - den Feineinschnitt begrenzenden Einschnittwände in der radial äußeren Oberfläche stetig unter Einschluss eines kleinen Neigungswinkels $\gamma$ mit $0° < \gamma \leq 5°$ zur Umfangsrichtung U zu einer axialen Seite hin geneigt ausgebildet ist, wobei der Verlauf im Übergang zwischen den benachbarten Umfangsabschnitt mit sprunghaftem axialen Versatz zur entgegengesetzten axialen Seite hin ausgebildet ist. Hierdurch werden zusätzlich in Umfangsrichtung wirksame Griffkanten generiert.

Besonders vorteilhaft ist die Ausbildung eines Fahrzeugreifens gemäß den Merkmalen von Anspruch 3, bei dem in den die Reifenachse beinhaltenden Schnittebenen des Reifens die eine den Einschnitt begrenzende Rillenwand im radial äußeren Erstreckungsbereich des Feineinschnitts unter Einschluss eines Neigungswinkels $\alpha$ zur radialen Richtung R geneigt ist und bei dem die andere den Einschnitt begrenzende Rillenwand im radial äußeren Erstreckungsbereich des Feineinschnitts unter Einschluss eines Neigungswinkels $\beta$ zur radialen Richtung R geneigt ist, wobei die Größe des Winkels $\alpha$ längs der Umfangserstreckung des Feineinschnittes variiert, wobei das Maß $\Delta\alpha$ der Veränderung des Winkels $\alpha$ über den Umfang hinweg mit $11° \leq \Delta\alpha \leq 67°$ - insbesondere mit $\Delta\alpha = 45°$- ausgebildet ist. Durch die auf diese Weise trichterförmige Erweiterung des Einschnitts kann in einfacher Weise ein weiter verbessertes Einströmverhalten des Wassers in den einschnitt ermöglicht werden.

Besonders vorteilhaft ist die Ausbildung eines Fahrzeugreifens gemäß den Merkmalen von Anspruch 4, bei dem die Größe des Winkels $\beta$ längs der Umfangserstreckung des Feineinschnittes variiert, wobei das Maß $\Delta\beta$ der Veränderung des Winkels $\beta$ über den Umfang hinweg mit $11° \leq \Delta\beta \leq 67°$ - insbesondere mit $\Delta\alpha = 45°$- ausgebildet ist. Durch die auf diese Weise trichterförmige Erweiterung des Einschnitts kann in einfacher Weise ein weiter verbessertes Einströmverhalten des Wassers in den einschnitt ermöglicht werden.

Besonders vorteilhaft ist die Ausbildung eines Fahrzeugreifens gemäß den Merkmalen von Anspruch 5, bei dem $\Delta\beta = \Delta\alpha$ ausgebildet ist. Hierdurch wird eine gleichmäßige oberflächlich ausgebildete Öffnung erzeugt, die zur Lösung des Zielkonfliktes aus guten Nasshandling-Eigenschaften und aus guten Trockenhandling-Eigenschaften vorteilhaft ist.

Besonders vorteilhaft ist die Ausbildung eines Fahrzeugreifens gemäß den Merkmalen von Anspruch 6, bei dem die mit dem Winkel $\alpha$ geneigt ausgebildete Einschnittwand den Einschnitt zu der für den Einsatz im Fahrzeug als Innenschulter hin ausgebildeten Reifenschulter hin begrenzt und $\Delta\beta < \Delta\alpha$ ausgebildet ist. Hierdurch wird die besonders beim Handling für Einrolleffekte aufgrund von Querkräften besonders anfällige, zur Innenschulter hinweisende Einschnittwand besonders gegen die Einrolleffekte geschützt.

Besonders vorteilhaft ist die Ausbildung eines Fahrzeugreifens gemäß den Merkmalen von Anspruch 7, bei dem die Größe des Winkels $\beta$ längs der Umfangserstreckung des Feineinschnittes konstant ist.

Besonders vorteilhaft ist die Ausbildung eines Fahrzeugreifens gemäß den Merkmalen von Anspruch 8, bei dem L mit $50\text{mm} \leq L \leq 200\text{mm}$ ausgebildet ist. Die

Ausbildung ist besonders günstig für Sportreifen mit den dort üblichen Profilblocklängen.

Besonders vorteilhaft ist die Ausbildung eines Fahrzeugreifens gemäß den Merkmalen von Anspruch 9, bei dem die Erstreckungshöhe $H_3$ mit $1\text{mm} \leq H_3 \leq 4\text{mm}$ ausgebildet ist. Diese Ausbildung ermöglicht eine optimale Gestaltung mit der eine wirksame Ableitung ohne unerwünschte Schwächung der Reifenschulter einfach und sicher umgesetzt werden kann.

Besonders vorteilhaft ist die Ausbildung eines Fahrzeugreifens gemäß den Merkmalen von Anspruch 10, bei dem die Kanalbreite $B_i$ mit $(0,5\ H_i) \leq B_i \leq (2\ H_i)$ ausgebildet ist. Mit dieser Ausbildung ist in einfacher Weise ausreichende Entwässerung bei hoher Steifigkeit umsetzbar. Zusätzlich kann hierdurch in einfacher Weise eine ausreichen hohe Abstützwirkung im Bereich des Feineinschnitts sicher umgesetzt werden.

Die Erfindung wird im Folgenden an Hand der in den Figuren 1 bis 5 dargestellten Ausführungsbeispiele näher erläutert. Hierin zeigen

Fig. 1    einen Umfangsabschnitt eines Laufstreifenprofils für Pkw-Fahrzeugluftreifen in Draufsicht,

Fig. 2    einen Einschnitt des Laufstreifenprofils von Fig. 1 in Schnittdarstellung gemäß Schnitt II-II von Fig.1, welche die Reifenachse beinhaltet,

Fig. 3    den Einschnitt von Fig.1 in Schnittdarstellung gemäß Schnitt III-III von Fig.1, welche die Reifenachse beinhaltet,

Fig. 4    den Einschnitt von Fig.1 in Schnittdarstellung gemäß Schnitt IV-IV von Fig.1, welche die Reifenachse beinhaltet, und

Fig. 5    den Einschnitt von Fig.1 in Schnittdarstellung gemäß Schnitt V-V von Fig.1.

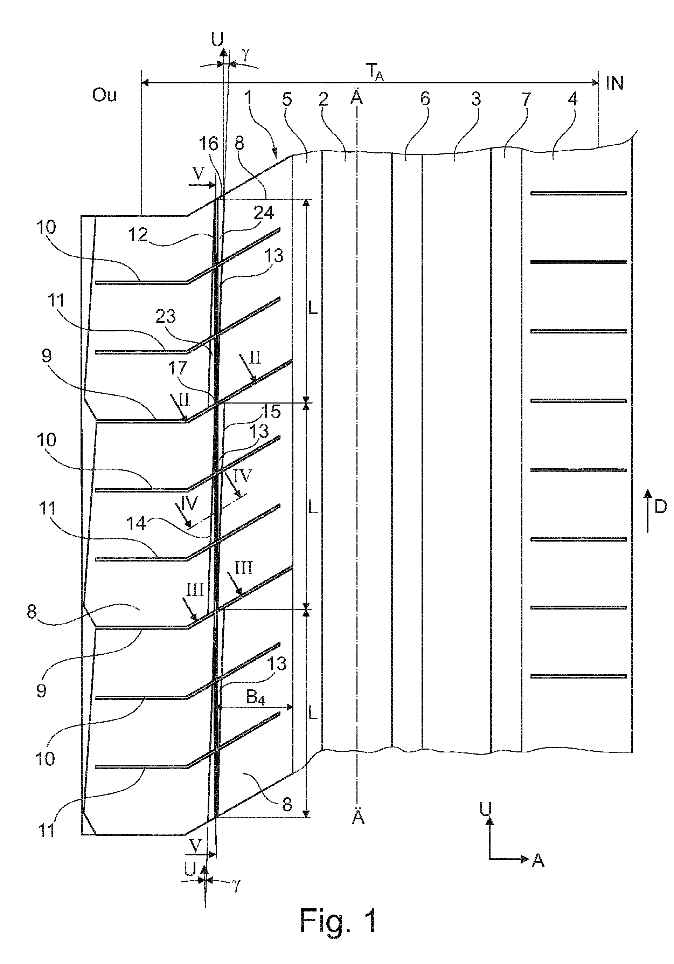

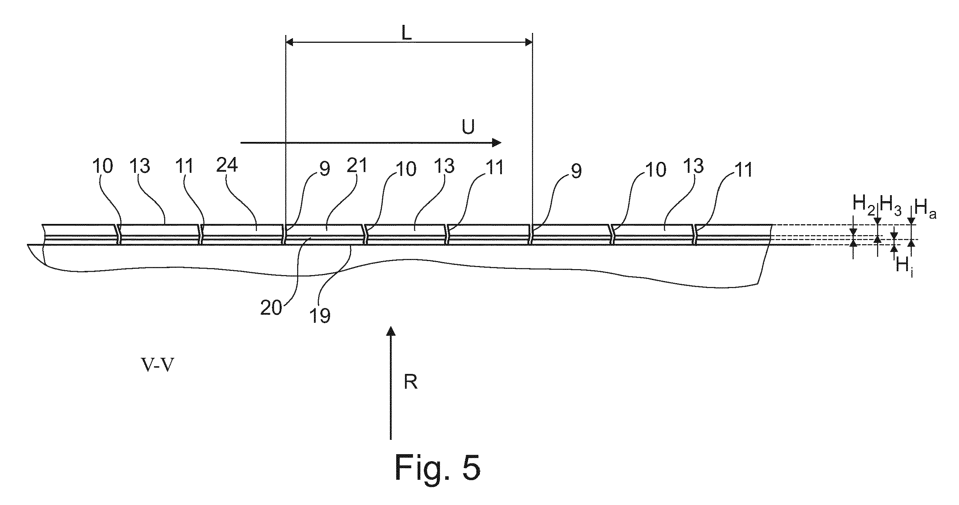

Die Figuren 1 bis 5 zeigen ein Laufstreifenprofil eines Fahrzeugluftreifens für Pkw-Fahrzeugluftreifen, welcher für besonders sportliche Fahrweise bzw. Sportwagen geeignet ist. Der Fahrzeugluftreifen ist mit einer speziell für die im montierten Zustand am Fahrzeug zu der vom Fahrzeug weg weisenden axialen Außenseite OU ausgebildeten Reifenaußenschulter (Außenschulter) und mit einer im montierten Zustand am Fahrzeugluftreifen in axialer Richtung zum Fahrzeug hin weisenden axialen Innenseite IN ausgebildeten Reifeninnenschulter (Innenschulter) ausgebildet. Der Fahrzeugluftreifen ist - wie in Fig.1 dargestellt ist - mit einer in der Reifenaußenschulter ausgebildeten, über den gesamten Umfang des Fahrzeugluftreifen erstreckten und in Umfangsrichtung U des Fahrzeugluftreifens ausgerichteten Profilblockreihe 1 und mit einem auf der Reifeninnenschulter ausgebildeten, über den gesamten Umfang des Fahrzeugluftreifen erstreckten und in Umfangsrichtung U ausgerichteten Profilband 4 - beispielsweise einer Umfangsrippe oder einer Profilblockreihe - ausgebildet. In axialer Richtung A zwischen der Profilblockreihe 1 und dem Profilband 4 sind im zentralen Erstreckungsbereich des Laufstreifenprofils mehrere, beispielsweise zwei Profilbänder 2 und 3, welche sich über den gesamten Umfang des Fahrzeugluftreifens erstrecken und in Umfangsrichtung U ausgerichtet sind, ausgebildet. Die Profilbänder 2 und 3 sind beispielsweise Umfangsrippen oder Profilblockreihen bekannter Art.

Die Profilblockreihe 1 und das Profilband 2 sind in bekannter Weise in axialer Richtung A durch eine über den gesamten Umfang des Fahrzeugluftreifen erstreckte und in Umfangsrichtung U ausgerichtete Umfangsrille 5 bekannter Art voneinander getrennt. Das Profilband 2 und das Profilband 3 sind in bekannter Weise durch eine über den gesamten Umfang des Fahrzeugluftreifens erstreckte und in Umfangsrichtung U ausgerichtete Umfangsrille 6 voneinander axial getrennt. Das Profilband 3 und das Profilband 4 sind in bekannter Weise durch eine über den gesamten Umfang des Fahrzeugluftreifens erstreckte und in Umfangsrichtung U ausgerichtete Umfangsrille 7 in axialer Richtung A voneinander getrennt.

Die Breite $T_A$ der Bodenaufstandsfläche (Bodenaufstandsbreite) erstreckt sich in axialer Richtung A aus dem axialen Erstreckungsbereich der Profilblockreihe 1 bis in den axialen Erstreckungsbereich des Profilbandes 4. Die Bodenaufstandsbreite $T_A$ ist die Breite des den Boden berührenden Teils des Laufstreifens, welcher dem statisch ermittelten Footprint gemäß E.T.R.T.O.-Standards (Last bei 70 % der Tragfähigkeit bei einem Innendruck von 2,5 bar, Innendruck 85 % von 2,5 bar) entspricht.

Die Profilblockreihe 1 ist in bekannter Weise aus einer Vielzahl von in Umfangsrichtung U des Fahrzeugluftreifens hintereinander angeordneten und jeweils durch Querrillen 9 voneinander getrennten Profilblockelementen 8 ausgebildet. Die Querrillen 9 erstrecken sich dabei ausgehend von der Umfangsrille 5 über die gesamte axiale Erstreckungsbreite der Profilblockreihe 1 im Erstreckungsbereich der Bodenaufstandsbreite $T_A$ bis in den axialen Erstreckungsbereich außerhalb der Bodenaufstandsbreite $T_A$. Im axialen Abstand $B_4$ von der Umfangsrille 5 ist innerhalb der Bodenaufstandsbreite $T_A$ in der Profilblockreihe 1 ein über den gesamten Umfang des Fahrzeugluftreifens erstreckter Einschnitt 12 ausgebildet. Der Abstand $B_4$ ist mit 20mm≤ $B_4$≤40mm, beispielsweise mit $B_4$= 30mm gewählt.

Die Profilblockelemente 8 sind in radialer Richtung nach außen hin durch einen innerhalb der Bodenaufstandsbreite $T_A$ die Straßenkontaktoberfläche bildende radial äußere Oberfläche 18 begrenzt. Die Umfangsrille 5 sowie die Querrillen 9 sind mit einer Profiltiefe $P_T$ ausgebildet, welche in radialer Richtung R ausgehend von der radial äußeren Oberfläche 18 nach innen hin gemessen wird.

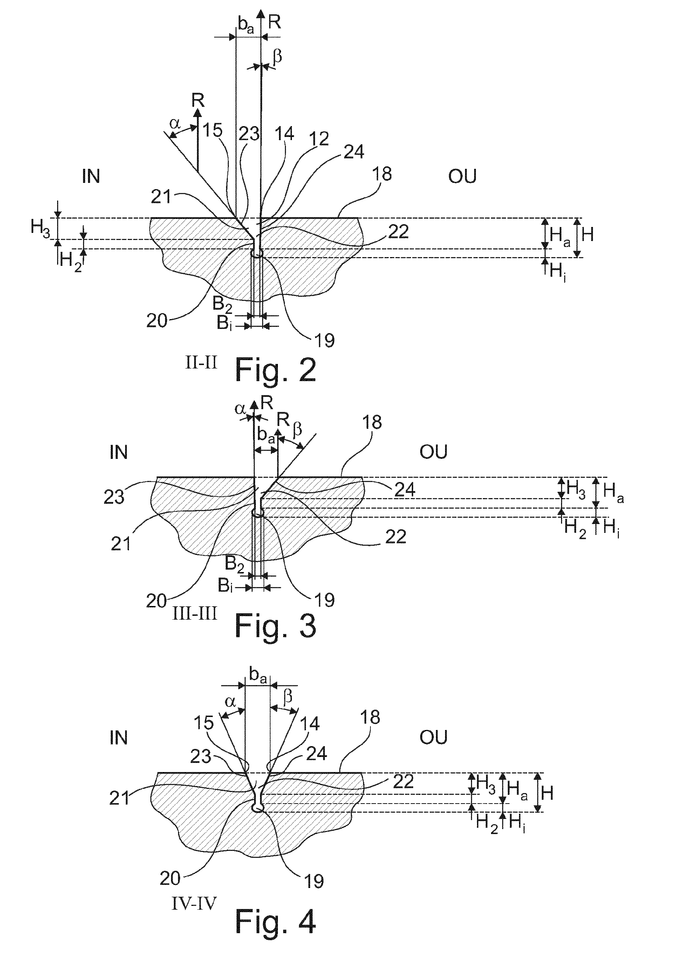

Der Einschnitt 12 ist mit einer in radialer Richtung R ausgehend von der radial äußeren Oberfläche 18 nach innen bis zum Einschnittsgrund gemessenen Tiefe H ausgebildet, welche der Profiltiefe $P_T$ entspricht. Der Einschnitt 12 ist - wie in den Figuren 2 bis 5 dargestellt ist - in seinem radial inneren Erstreckungsende der Erstreckungshöhe $H_i$ als in Umfangsrichtung U des Fahrzeugluftreifens geradlinig erstreckte Durchgangsöffnung 19 der in axialer Richtung A gemessenen Öffnungsbreite $B_i$ und der in radialer Richtung R gemessenen Höhe $H_i$ ausgebildet. Der Einschnitt 12 ist in dem radialen Erstreckungsbereich oberhalb der Durchgangsöffnung 19 als Feineinschnitt 22 ausgebildet, welcher sich ausgehend von der Durchgangsöffnung 19 bis zur radial äußeren Oberfläche 18 mit der in radialer Richtung R gemessenen Erstreckungshöhe $H_a$ erstreckt, wobei die Tiefe H mit H = $(H_a + H_i)$ ausgebildet ist.

Der Feineinschnitt 22 ist aus einem radial äußeren Abschnitt 21 und aus einem radial inneren Abschnitt 20 ausgebildet. Der radial äußere Abschnitt 21 erstreckt sich ausgehend von der radial äußeren Oberfläche 18 in radialer Richtung nach innen hin über eine Erstreckungshöhe $H_3$. Der radiale innere Abschnitt 20 schließt sich an den radial äußeren Abschnitt 21 an und erstreckt sich ausgehend vom radial inneren Erstreckungsende des radial äußeren Abschnitts 21 bis zur Durchgangsöffnung 19 über eine radiale Erstreckungshöhe $H_2$ mit $(H_2 + H_3)= H_a$.

Der Feineinschnitt 22 ist in seinem radial inneren Abschnitt 20 über die gesamte Erstreckungshöhe $H_2$ mit einer in axialer Richtung A gemessenen Einschnittsbreite $B_2$ mit $B_2 < B_i$ ausgebildet. Der Feineinschnitt 20 ist über den gesamten Umfang des Fahrzeugluftreifens erstreckt und in Umfangsrichtung U geradlinig ausgerichtet und längs seiner gesamten Erstreckung mit seiner Einschnittsbreite $B_2$ ausgebildet.

Der Einschnitt 12 ist in axialer Richtung A zur Innenschulter IN hin durch eine Einschnittswand 23 und zur Außenseite OU hin durch eine Einschnittswand 24 begrenzt. Die Einschnittswand 24 ist im radial äußeren Erstreckungsbereich des Feineinschnitts 22 unter Einschluss eines Neigungswinkels ß zur radialen Richtung R geneigt ausgebildet. Die Einschnittswand 23 ist im radial äußeren Erstreckungsbereich des Feineinschnitts 22 unter Einschluss eines Neigungswinkels α zur radialen Richtung R geneigt ausgebildet.

Der zwischen den beiden ein Profilblockelement 8 begrenzenden Querrillen 9 ausgebildete Umfangserstreckungsabschnitts 13 des Einschnitts 12 ist in Figur 1 ebenfalls bezeichnet.

In der in Fig.1 dargestellten Ausführung ist die Einschnittwand 24 in der von Fig.1 von unten nach oben hin dargestellten Drehrichtung in Umfangsrichtung längs des Umfangserstreckungsabschnitts 13 des Einschnitts 12 ausgehend von der dem Profilblockelement 8 in Drehrichtung D vorgeordneten Querrille 9 bis zu der dem Profilblockelement 8 in Drehrichtung D nachgeordneten Querrille 9 kontinuierlich zunehmenden Neigungswinkel ß ausgebildet. Die Einschnittwand 23 ist längs des Umfangserstreckungsabschnitts 13 des Einschnitts 12 ausgehend von der dem Profilblockelement 8 in Drehrichtung D vorgeordneten Querrille 9 bis zu der dem Profilblockelement 8 in Drehrichtung D nachgeordneten Querrille 9 kontinuierlich abnehmenden Neigungswinkel α ausgebildet. Dabei ist der Neigungswinkel ß in der Position der vorgeordneten Querrille 9 jeweils mit seinem Minimum und der Neigungswinkel $\alpha$ der vorgeordneten Querrille 9 mit seinem Maximum ausgebildet. In Position der das Profilblockelement 8 nachgeordneten Querrille 9 weist der Winkel ß sein Maximum und der Winkel $\alpha$ sein Minimum auf. Die Winkelveränderung $\Delta\alpha$ des Winkels $\alpha$ längs der Erstreckung des Einschnitts 12 zwischen der dem Profilblockelement 8 vorgeordneten Querrille 9 und der dem Profilblockelement 8 nachgeordneten Querrille 9 ist dabei mit $11° \leq \Delta\alpha \leq 67°$, beispielsweise mit $\Delta\alpha = 45°$ gewählt. Die Winkelveränderung $\Delta$ß des Winkels ß längs der Erstreckung des Einschnitts 12 zwischen der dem Profilblockelement 8 nachgeordneten Querrille 9 und der dem Profilblockelement 8 vorgeordneten Querrille 9 ist dabei mit $11° \leq \Delta$ß$ \leq 67°$, beispielsweise mit $\Delta$ß$ = 45°$ gewählt. Beispielsweise ist $\Delta\alpha = \Delta$ß$ = 45°$ gewählt.

Wie in Fig. 1 dargestellt ist, ist dabei die Schnittkonturlinie 15 der Einschnittwand 23 in der radial äußeren Oberfläche und die Schnittkonturlinie 14 der Einschnittwand 22 in der radial äußeren Oberfläche 18 jeweils über die Erstreckungslänge L, die den in Umfangsrichtung U gemessenen Abstand der beiden das Profilblockelement 8 begrenzenden Querrillen 9 in der axialen Position der Einmündung des radial inneren Abschnitts 20 des Feineinschnitts 22 angibt, jeweils geradlinig unter Einschluss eines Neigungswinkels $\gamma$ zur Umfangsrichtung verlaufend ausgebildet. Der Winkel $\gamma$ ist dabei mit $0° < \gamma \leq 5°$ ausgebildet. Beispielsweise ist $\gamma = 3°$.

In der Position der das im Profilblockelement 8 begrenzenden Querrille 9 ist der Verlauf der Schnittlinie 15 und der Verlauf der Schnittkante 14 jeweils in axialer Richtung A längs der Querrille 9 um das Maß der durch den Winkel $\gamma$ im Profilblockelement 8 erfolgten axialen Positionsverschiebung wieder zurückversetzt. Im dargestellten Ausführungsbeispiel ist der Abstand der Schnittkonturlinie 14 und 15 in axialer Richtung A längs der Erstreckung R konstant gewählt.

In anderer - nicht dargestellter - Ausführung ist die Veränderung $\Delta\alpha$ längs der Erstreckung L größer als $\Delta$ß ausgebildet. Der Abstand der beiden Schnittkonturlinien 14 und 15 nimmt dabei längs der Erstreckung des Einschnitts 12 zwischen der einen das Profilblockelement 8 begrenzenden Querrille 9 und der anderen das Profilblockelement 8 begrenzenden Querrille 9 kontinuierlich zu.

Die Breite $B_i$ ist mit $(0,5 H_i \leq B_i \leq 2 H_i)$ ausgebildet, beispielsweise ist $B_i = H_i$ ausgebildet.

Im dargestellten Ausführungsbeispiel ist der Durchgangskanal 19 mit einem senkrecht zur Erstreckungsrichtung gebildeten Querschnitt mit einer kreissegmentförmigen Querschnittskontur ausgebildet.

Die Höhe $H_i$ ist mit $(1/9) H \leq H_i \leq (1/3) H$ ausgebildet.

Die Größe $H_i$ ist dabei mit $1mm \leq H_i \leq 3mm$, beispielsweise mit $H_i = 3mm$ ausgebildet.

Die Größe $H_a$ ist mit $(8/9) H \leq H_a \leq (2/3) H$ ausgebildet).

Die Breite $B_2$ ist mit $0,5mm \leq B_2 \leq 1,6$ mm ausgebildet.

Die Höhe H ist mit $5mm \leq H \leq 9mm$ ausgebildet. Beispielsweise ist $H = P_T = 9mm$ ausgebildet.

Die Länge L ist mit $50mm \leq L \leq 20mm$ ausgebildet.

Figur 1 zeigt ein weiteres Ausführungsbeispiel, welchem im Profilband zwischen zwei ein Profilblockelement begrenzenden Querrillen 9 jeweils zusätzlich zwei weitere parallel zu den Querrillen 9 ausgebildete Querrillen 10,11 ausgebildet sind, die sich ebenfalls innerhalb der Bodenaufstandsbreite $T_A$ über den Einschnitt 12 hinweg erstrecken und mit axialem Abstand zur Umfangsrille 5 enden.

Bezugszeichenliste (Teil der Beschreibung)

| 1 | Profilblockreihe |
|---|---|
| 2 | Umfangsrippe |
| 3 | Umfangsrippe |
| 4 | Profilblockreihe |
| 5 | Umfangsrille |
| 6 | Umfangsrille |
| 7 | Umfangsrille |
| 8 | Profilblockelement |
| 9 | Querrille |
| 10 | Querrille |
| 11 | Querrille |
| 12 | Einschnitt |
| 13 | Umfangsabschnitt |
| 14 | Schnittkante |
| 15 | Schnittkante |
| 16 | Versatz |
| 17 | Versatz |
| 18 | Radial äußere Oberfläche |
| 19 | Durchgangsöffnung |
| 20 | Innerer Abschnitt |
| 21 | Äußerer Abschnitt |
| 22 | Feineinschnitt |
| 23 | Einschnittswand |
| 24 | Einschnittswand |

**Patentansprüche**

1. Fahrzeugluftreifen für Personenkraftwagen mit einem profilierten Laufstreifen mit durch Rillen (5,6,7) von einander beabstandeten Profilbändern (1,2,3,4), welche sich über den gesamten Umfang des Fahrzeugluftreifens erstrecken und in radialer Richtung R nach außen von einer die Bodenkontaktoberfläche bildenden radial äußeren Oberfläche (18) begrenzt sind, wobei in wenigstens einem Profilband (1) ein über den gesamten Umfang erstreckter Einschnitt (12) ausgebildet ist, welcher sich in radialer Richtung R des Reifens ausgehend von der radial äußeren Oberfläche (18) des Profilbandes (1) nach radial innen bis in eine Tiefe H erstreckt und dort endet, wobei der Einschnitt (12) in radialer Richtung R mit einem radial inneren Erstreckungsbereich der radialen Erstreckungshöhe $H_i$ und mit einem radial äußeren Erstreckungsbereich der radialen Erstreckungshöhe $H_a$ ausgebildet ist, wobei der Einschnitt (12) im radial äußeren Erstreckungsbereich als Feineinschnitt (22) und im radial inneren Erstreckungsbereich als Durchgangskanal (19) mit der Kanalbreite $B_i$ ausgebildet ist und wobei der Feineinschnitt (22) in seinem radial inneren, an den Durchgangskanal (19) anschließenden Erstreckungsabschnitt (20) der Erstreckungshöhe $H_2$ mit konstanter Feineinschnittbreite $B_2$ mit $B_2 < B_i$ und in seinem radial äußeren Erstreckungsbereich (21) der Erstreckungshöhe $H_3$ v-förmig erweitert mit einer bis zur radial äußeren Oberfläche (18) hin kontinuierlich zunehmenden Breite $B_3$ ausgebildet ist, **dadurch gekennzeichnet, dass** das Profilband (1) in der als für den Einsatz im Fahrzeug als Außenschulter OU ausgebildeten Reifenschulter ausgebildet ist, dass der Durchgangskanal (19) und der innere Erstreckungsbereich (20) des Feineinschnitts (22) über den gesamten Umfang hinweg in Umfangsrichtung U geradlinig erstreckt verlaufend ausgebildet sind und dass über den Umfang des Reifens hinweg hintereinander Umfangserstreckungsabschnitte (13) angeordnet sind, in welchen der Verlauf einer der beiden - insbesondere beider der - den Feineinschnitt (22) begrenzenden Einschnittswände (23,24) in der radial äußeren Oberfläche (18) unter Einschluss eines sich über den Umfang des Reifens geänderten Neigungswinkels $\gamma$ zur Umfangsrichtung U ausgebildet ist.

2. Fahrzeugluftreifen gemäß den Merkmalen von Anspruch 1,
bei dem über den Umfangs des Reifens hinweg hintereinander Umfangserstreckungsabschnitte (13) der in Umfangsrichtung U gemessenen Erstreckungslänge L angeordnet sind, in welchen der Verlauf einer der beiden - insbesondere beider der - den Feineinschnitt (22) begrenzenden Einschnittswände (23,24) in der radial äußeren Oberfläche stetig unter Einschluss eines kleinen Neigungswinkels $\gamma$ mit $0° < \gamma \leq 5°$ zur Umfangsrichtung U zu einer axialen Seite hin geneigt ausgebildet ist,
wobei der Verlauf im Übergang zwischen den benachbarten Umfangsabschnitten (13) mit sprunghaftem axialen Versatz zur entgegengesetzten axialen Seite hin ausgebildet ist.

3. Fahrzeugluftreifen gemäß den Merkmalen von Anspruch 1 oder 2,
wobei in den die Reifenachse beinhaltenden Schnittebenen des Reifens die eine den Einschnitt (12) begrenzende Rillenwand (23) im radial äußeren Erstreckungsbereich des Feineinschnitts (22) unter Einschluss eines Neigungswinkels $\alpha$ zur radialen Richtung R geneigt ist und wobei die andere den Einschnitt (12) begrenzende Rillenwand (24) im radial äußeren Erstreckungsbereich des Feineinschnitts (22) unter Einschluss eines Neigungswinkels $\beta$ zur radialen Richtung R geneigt ist,
wobei die Größe des Winkels $\alpha$ längs der Umfangserstreckung des Feineinschnittes (22) variiert, wobei das Maß $\Delta\alpha$ der Veränderung des Winkels $\alpha$ über den Umfang hinweg mit $11° \leq \Delta\alpha \leq 67°$ - insbesondere mit $\Delta\alpha = 45°$ - ausgebildet ist.

4. Fahrzeugluftreifen gemäß den Merkmalen von Anspruch 3,
bei dem die Größe des Winkels $\beta$ längs der Umfangserstreckung des Feineinschnittes (22) variiert, wobei das Maß $\Delta\beta$ der Veränderung des Winkels $\beta$ über den Umfang hinweg mit $11° \leq \Delta\beta \leq 67°$ - insbesondere mit $\Delta\alpha = 45°$ - ausgebildet ist.

5. Fahrzeugluftreifen gemäß den Merkmalen von Anspruch 4,
wobei $\Delta\beta = \Delta\alpha$ ausgebildet ist.

6. Fahrzeugluftreifen gemäß den Merkmalen von Anspruch 4,
wobei die mit dem Winkel $\alpha$ geneigt ausgebildete Einschnittwand (24) den Einschnitt (12) zu der für den Einsatz im Fahrzeug als Innenschulter hin ausgebildeten Reifenschulter (IN) hin begrenzt und $\Delta\beta < \Delta\alpha$ ausgebildet ist.

7. Fahrzeugluftreifen gemäß den Merkmalen von Anspruch 3,
wobei die Größe des Winkels $\beta$ längs der Umfangserstreckung des Feineinschnittes (22) konstant ist.

8. Fahrzeugluftreifen gemäß den Merkmalen von Anspruch 2,
wobei L mit $50mm \leq L \leq 200mm$ ausgebildet ist.

9. Fahrzeugluftreifen gemäß den Merkmalen von Anspruch 1,
wobei die Erstreckungshöhe $H_3$ mit $1mm \leq H_3 \leq 4mm$ ausgebildet ist.

10. Fahrzeugluftreifen gemäß den Merkmalen von Anspruch 1,
wobei die Kanalbreite $B_i$ mit $(0,5\, H_i) \leq B_i \leq (2\, H_i)$ ausgebildet ist.

**Claims**

1. Pneumatic vehicle tyre for passenger cars comprising a profiled tread with profile strips (1, 2, 3, 4), which are spaced apart from one another by grooves (5, 6, 7), extend over the entire circumference of the pneumatic vehicle tyre and are delimited outwardly in the radial direction R by a radially outer surface (18) forming the ground contact surface, wherein in at least one profile strip (1) there is formed a notch (12), which is made to extend over the entire circumference, in the radial direction R of the tyre extends from the radially outer surface (18) of the profile strip (1) radially inwards to a depth H and ends there, wherein the notch (12) is formed in the radial direction R with a radially inner region of extent of the radial height of extent $H_i$ and with a radially outer region of extent of the radial height of extent $H_a$, wherein the notch (12) is formed in the radially outer region of extent as a sipe (22) and in the radially inner region of extent as a through-channel (19) with the channel width $B_i$ and wherein the sipe (22) is formed in its radially inner portion of extent (20) of the height of extent $H_2$, adjoining the through-channel (19), with a constant sipe width $B_2$, with $B_2<B_i$, and is formed in its radially outer region of extent (21) of the height of extent $H_3$ as widened in a v-shaped manner with a width $B_3$ increasing continuously towards the radially outer surface (18),

**characterized**

**in that** the profile strip (1) is formed a in the tyre shoulder formed as for use in the vehicle as an outer shoulder OU, in that the through-channel (19) and the inner region of extent (20) of the sipe (22) are formed as running over the entire circumference so as to extend in a straight line in the circumferential direction U and in that arranged one behind the other over the circumference of the tyre are portions of circumferential extent (13) in which the path of one of the two - in particular both of the - notch walls (23, 24) delimiting the sipe (22) is formed in the radially outer surface (18) with the inclusion of an angle of inclination $\gamma$ in relation to the circumferential direction U that is altered over the circumference of the tyre.

2. Pneumatic vehicle tyre according to the features of Claim 1,
in which there are arranged one behind the other over the circumference of the tyre portions of circumferential extent (13) of the length of extent L, measured in the circumferential direction U, in which the path of one of the two - in particular both of the - notch walls (23, 24) delimiting the sipe (22) is formed in the radially outer surface continuously inclined in relation to an axial side with the inclusion of a small angle of inclination $\gamma$, with $0°<\gamma\leq 5°$, in relation to the circumferential direction U,
wherein the path is formed with an abrupt axial offset to the opposite axial side at the transition between the adjacent circumferential portions (13).

3. Pneumatic vehicle tyre according to the features of Claim 1 or 2,
wherein, in the sectional planes of the tyre containing the tyre axis, the one groove wall (23) that delimits the notch (12) in the radially outer region of extent of the sipe (22) is inclined with the inclusion of an angle of inclination $\alpha$ in relation to the radial direction R and wherein the other groove wall (24) that delimits the notch (12) in the radially outer region of extent of the sipe (22) is inclined with the inclusion of an angle of inclination $\beta$ in relation to the radial direction R,
wherein the size of the angle $\alpha$ varies along the circumferential extent of the sipe (22), the measure $\Delta\alpha$ of the change of the angle $\alpha$ over the circumference being formed with $11°\leq\Delta\alpha\leq67°$, in particular with $\Delta\alpha=45°$.

4. Pneumatic vehicle tyre according to the features of Claim 3,
in which the size of the angle $\beta$ varies along the circumferential extent of the sipe (22), the measure $\Delta\beta$ of the change of the angle $\beta$ over the circumference being formed with $11°\leq\Delta\beta\leq67°$, in particular with $\Delta\alpha=450$.

5. Pneumatic vehicle tyre according to the features of Claim 4,
wherein

$$\Delta\beta=\Delta\alpha.$$

6. Pneumatic vehicle tyre according to the features of Claim 4,
wherein the notch wall (24) formed inclined with the angle $\alpha$ delimits the notch (12) towards the tyre shoulder (IN) formed for use in the vehicle as the inner shoulder and $\Delta\beta<\Delta\alpha$.

7. Pneumatic vehicle tyre according to the features of Claim 3,
wherein the size of the angle P is constant along the circumferential extent of the sipe (22).

8. Pneumatic vehicle tyre according to the features of Claim 2,
wherein L is formed with $50\ mm\leq L\leq200\ mm$.

9. Pneumatic vehicle tyre according to the features of Claim 1,
wherein the height of extent $H_3$ is formed with $1\ mm\leq H_3\leq4mm$.

10. Pneumatic vehicle tyre according to the features of Claim 1,
wherein the channel width $B_i$ is formed with $(0.5\ H_i)\leq B_i\leq (2\ H_i)$.

**Revendications**

1. Pneumatique pour véhicules de tourisme, comprenant une bande de roulement profilée avec des bandes profilées (1, 2, 3, 4) espacées les unes des autres par des rainures (5, 6, 7) qui s'étendent sur toute la périphérie du pneumatique de véhicule et qui sont limitées dans la direction radiale R vers l'extérieur par une surface radialement extérieure (18) formant la surface de contact avec le sol, une entaille (12) s'étendant sur toute la périphérie étant réalisée dans au moins une bande profilée (1), laquelle s'étend dans la direction radiale R du pneu depuis la surface radialement extérieure (18) de la bande profilée (1) radialement vers l'intérieur jusqu'à une profondeur H et se termine à cet endroit, l'entaille (12) étant réalisée dans la direction radiale R avec une région d'étendue radialement interne de hauteur d'étendue radiale $H_i$ et avec une région d'étendue radialement extérieure de hauteur d'étendue radiale $H_a$, l'entaille (12) étant réalisée dans la région d'étendue radialement extérieure sous forme de fine entaille (22) et dans la région d'étendue radialement intérieure sous forme de canal de passage (19) de largeur de canal Bi, et la fine entaille (22), dans sa portion d'étendue radialement interne (20), se raccordant au canal de passage (19), de hauteur d'étendue $H_2$, s'élargissant avec une largeur de fine entaille constante $B_2$ avec $B_2 < B_i$ et, dans sa région d'étendue radialement extérieure (21) de hauteur d'étendue $H_3$, s'élargissant en forme de V avec une largeur $B_3$ augmentant en continu vers la surface radialement extérieure (18),
**caractérisé en ce que** la bande profilée (1) est réalisé un dans l'épaulement de pneu réalisé pour l'utilisation dans le véhicule en tant qu'épaulement extérieur OU, **en ce que** le canal de passage (19) et la région d'étendue interne (20) de la fine entaille (22) sont réalisés de manière à s'étendre en ligne droite au-delà de la périphérie complète dans la direction périphérique U et **en ce que** des portions d'étendue périphérique (13) sont disposées au-delà de la périphérie du pneu les unes derrière les autres, dans lesquelles est réalisée l'allure de l'une des deux, en particulier des deux parois d'entailles (23, 24) délimitant la fine entaille (22) dans la surface radialement extérieure (18), en formant un angle d'inclinaison γ par rapport à la direction périphérique U variant sur la périphérie du pneu.

2. Pneumatique pour véhicules selon les caractéristiques de la revendication 1, dans lequel des portions d'étendue périphérique (13), de longueur d'étendue L mesurée dans la direction périphérique U, sont disposées les unes derrière les autres au-delà de la périphérie du pneu, dans lesquelles est réalisée l'allure de l'une des deux, en particulier des deux parois d'entailles (23, 24) délimitant la fine entaille (22) dans la surface radialement extérieure de manière constante en formant un petit angle d'inclinaison γ avec 0° < γ ≤ 5° par rapport à la direction périphérique U, de manière inclinée vers un côté axial, l'allure dans la transition entre les portions périphériques adjacentes (13) étant réalisée avec un décalage axial de type saut vers le côté axial opposé.

3. Pneumatique pour véhicules selon les caractéristiques de la revendication 1 ou 2, dans lequel, dans les plans de coupe du pneu contenant l'axe du pneu, l'une des parois de rainure (23) délimitant l'entaille (12) est inclinée dans la région d'étendue radialement extérieure de la fine entaille (22) en formant un angle d'inclinaison α par rapport à la direction radiale R et l'autre paroi de rainure (24) délimitant l'entaille (12) étant inclinée dans la région d'étendue radialement extérieure de la fine entaille (22) en formant un angle d'inclinaison β par rapport à la direction radiale R, la mesure de l'angle α variant le long de l'étendue périphérique de la fine entaille (22), la mesure Δα de la variation de l'angle α au-delà de la périphérie étant réalisée avec 11° ≤ Δα ≤ 67°, en particulier avec Δα = 45°.

4. Pneumatique pour véhicules selon les caractéristiques de la revendication 3, dans lequel la mesure de l'angle β varie le long de l'étendue périphérique de la fine entaille (22), la mesure Δβ de la variation de l'angle β au-delà de la périphérie étant réalisée avec 11° ≤ Δβ ≤ 67°, en particulier avec Δα = 45°.

5. Pneumatique pour véhicules selon les caractéristiques de la revendication 4, dans lequel

$$\Delta\beta \;=\; \Delta\alpha.$$

6. Pneumatique pour véhicules selon les caractéristiques de la revendication 4, dans lequel la paroi d'entaille (24) réalisée de manière inclinée suivant l'angle α délimite l'entaille (12) vers l'épaulement de pneu (IN) réalisé en tant qu'épaulement intérieur pour l'utilisation dans le véhicule et Δβ < Δα.

7. Pneumatique pour véhicules selon les caractéristiques de la revendication 3, dans lequel la mesure de l'angle β le long de l'étendue périphérique de la fine entaille (22) est constante.

8. Pneumatique pour véhicules selon les caractéristiques de la revendication 2, dans lequel L est réalisée avec 50 mm ≤ L ≤ 200 mm.

9. Pneumatique pour véhicules selon les caractéristiques de la revendication 1, dans lequel la hauteur d'étendue $H_3$ est réalisée avec 1 mm ≤ $H_3$ ≤ 4 mm.

**10.** Pneumatique pour véhicules selon les caractéristiques de la revendication 1, dans lequel la largeur de canal Bi est réalisée avec $(0,5 \, H_i) \leq B_i \leq (2 \, H_i)$.

Fig. 1

II-II  Fig. 2

III-III  Fig. 3

IV-IV  Fig. 4

Fig. 5

**EP 2 900 489 B1**

**IN DER BESCHREIBUNG AUFGEFÜHRTE DOKUMENTE**

**In der Beschreibung aufgeführte Patentdokumente**

- EP 0640499 B1